# EUROPÄISCHE PATENTANMELDUNG

(11) **EP 1 872 937 A1**
(43) Veröffentlichungstag der Anmeldung: **02.01.2008**
(21) Anmeldenummer: 07011338.6
(22) Anmeldetag: 09.06.2007
(51) Int. Cl.: B32B 15/08, B32B 27/18, F16C 33/20

(54) **Gleitlagerverbundwerkstoff**

(30) Priorität: 30.06.2006 DE 102006030320
(71) Anmelder: KS Gleitlager GmbH, 68789 St. Leon-Rot (DE)
(72) Erfinder: Bickle, Rüdiger, 68799 Reilingen (DE)
(74) Vertreter: Friz, Oliver

(57) **Zusammenfassung**

Die Erfindung betrifft einen Gleitlagerverbundwerkstoff (2) mit einer metallischen Stützschicht (4), mit einer darauf aufgebrachten porösen Trägerschicht (6) und mit einer eine Gleitfläche (8) für einen Gleitpartner bildenden bleifreien Gleitschicht (10) mit einem ersten Gleitschichtmaterial (12) auf Kunststoffbasis, wobei das erste Gleitschichtmaterial (12) eine matrixbildende Kunststoffkomponente (14) und ferner einen Schmierstoff und eine härtende Komponente umfasst; um den Werkstoff kostengünstiger herstellen zu können, wird vorgeschlagen, in die Poren der Trägerschicht (6) ein zweites Gleitschichtmaterial (16) mit einer anderen Kunststoffkomponente (18) als Haftvermittler für das die Gleitschicht (10) bildende erste Gleitschichtmaterial (12) einzubringen.

## Beschreibung

Die Erfindung betrifft einen Gleitlagerverbundwerkstoff mit einer metallischen Stützschicht, mit einer darauf aufgebrachten porösen Trägerschicht und mit einer eine Gleitfläche für einen Gleitpartner bildenden bleifreien Gleitschicht mit einem ersten Gleitschichtmaterial auf Kunststoffbasis, wobei das erste Gleitschichtmaterial eine matrixbildende Kunststoffkomponente und ferner einen Schmierstoff und eine härtende Komponente umfasst.

Es sind Gleitlagerverbundwerkstoffe für höchste Anforderungen hinsichtlich Belastbarkeit auch bei hohen Temperaturen bekannt. Hierfür werden Kunststoffkomponenten verwendet, die als besonders temperaturstabil anzusehen sind und höchsten Belastungen auch bei sehr hohen Temperaturen beispielsweise bis zu 250°C standzuhalten vermögen. Die Anmelderin hat beispielsweise mit DE 102 26 266 einen solchen Gleitlagerverbundwerkstoff vorgeschlagen.

Durch die Druckschriften DE 43 19 867 A1 und WO 2005/080810 A1 sind Gleitlagerverbundwerkstoffe bekannt, die aus einer metallischen Stützschicht, einer darauf aufgebrachten porösen Trägerschicht und einer darauf aufgebrachten Gleitschicht aus Kunststoff bestehen, wobei der Kunststoff der Gleitschicht auch die Poren der Trägerschicht ausfüllt.

Mit der vorliegenden Erfindung wurde erkannt, dass es möglich ist, auch sogenannte Hochleistungs-Gleitlagerverbundwerkstoffe kostengünstiger herzustellen. Die mit der vorliegenden Erfindung objektiv gelöste Aufgabe kann daher in einer Kostenreduzierung bei der Herstellung von besonders anspruchsvollen Gleitlagerverbundstoffen gesehen werden. Die Aufgabe wird gelöst durch einen Gleitlagerverbundwerkstoff der eingangs genannten Art, der dadurch gekennzeichnet ist, dass in die Poren der Trägerschicht ein zweites Gleitschichtmaterial mit einer anderen Kunststoffkomponente als Haftvermittler für das die Gleitschicht bildende erste Gleitschichtmaterial eingebracht ist.

Da das zweite Gleitschichtmaterial mit einer anderen Kunststoffkomponente als diejenige des ersten Gleitschichtmaterials ausgebildet ist, kann es hinsichtlich seiner Leistungsfähigkeit weniger aufwändig sein als die Kunststoffkomponente des ersten Gleitschichtmaterials. Das in die poröse Trägerschicht eingebrachte zweite Gleitschichtmaterial dient nämlich gewissermaßen nur der Verankerung des die eigentliche tribologisch aktive Gleitfläche bildenden ersten Gleitschichtmaterials an die Trägerschicht. Das in die Poren der Trägerschicht einimprägnierte zweite Gleitschichtmaterial wird nämlich tribologisch praktisch nicht wirksam. Es hält das tribologisch aktive erste Gleitschichtmaterial und dient allenfalls der Wärmeableitung an die metallische Trägerschicht, weshalb es auch Füllstoffe enthalten kann. Es wird also erfindungsgemäß ein verhältnismäßig preiswertes zweites Gleitschichtmaterial zum Auffüllen der porösen Trägerschicht verwendet, sodass das Volumen damit einhergehend die Kosten des Hochleistungs-Gleitlagerverbundwerkstoffs insgesamt reduziert werden können, jedoch ohne, dass hierdurch eine spürbare Qualitätsverringerung oder gar eine Herabsetzung der Belastungsfähigkeit verbunden wäre.

Das zweite Gleitschichtmaterial füllt die Poren der porösen Trägerschicht ganz oder teilweise auf. Wenn das zweite Gleitschichtmaterial die Poren wenigstens nahezu bis zur Oberfläche der porösen Trägerschicht ausfüllt, so ist eine maximale Kostenreduzierung erreicht, sofern es sich bei der Kunststoffkomponente des zweiten Gleitschichtmaterials um ein preiswertes Material, beispielsweise PPS oder PFA handelt.

Wie bereits erwähnt, kann das zweite Gleitschichtmaterial seinerseits Füllstoffe aufweisen, also beispielsweise die Wärmeleitfähigkeit erhöhende Zusätze wie metallische Füllstoffe, Fasern und/oder Graphit. Sofern das zweite Gleitschichtmaterial keine Füllstoffe enthält, kann es sich als vorteilhaft erweisen, wenn es die Poren der porösen Trägerschicht nicht vollständig, sondern beispielsweise nur bis zu 75%, gegebenenfalls bis zu 60% oder bis zu 50% ausfüllt und der Rest durch das erste Hochleistungs-Gleitschichtmaterial befüllt ist.

Sämtliche Füllstoffe, also Schmierstoffe und härtende Komponenten, die in den Patentansprüchen als Füllstoffe für das erste Gleitschichtmaterial beschrieben sind, eignen sich auch für die Verwendung in dem zweiten Gleitschichtmaterial.

Es wird also gewissermaßen ein Teil des ersten Gleitschichtmaterials durch das zweite Gleitschichtmaterial substituiert, und zwar in einem Bereich, nämlich innerhalb der Poren der Trägerschicht, wo das Gleitschichtmaterial nicht tribologisch aktiv wird, sondern hauptsächlich Verankerungszwecken dient.

Des weiteren wird Schutz beansprucht für ein Verfahren zum Herstellen eines erfindungsgemäßen Gleitlagerverbundwerkstoffs mit den Merkmalen der Ansprüche 14 und 15.

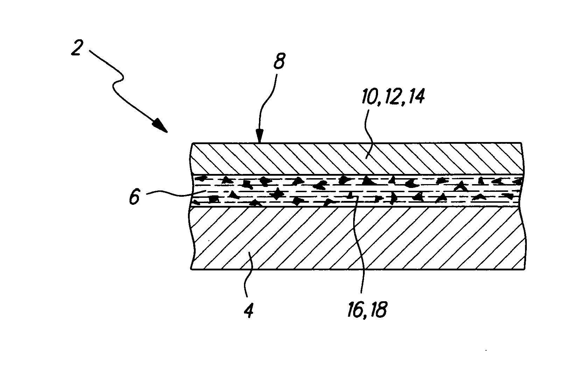

Weitere Merkmale, Vorteile und Einzelheiten der Erfindung ergeben sich aus den beigefügten Patentansprüchen. In der Zeichnung zeigt:
- Die Figur: eine schematische Schnittansicht eines erfindungsgemäßen

### Gleitlagerverbundwerkstoffs

Der aus der Figur ersichtliche Gleitlagerverbundwerkstoff 2 umfasst eine metallische Stützschicht 4 aus Stahl und eine darauf porös aufgesinterte Trägerschicht 6, vorzugsweise aus Bronze. Die Bronzeschicht ist entweder aus knolligen Bronzepartikeln mit einer von der Kugelform abweichenden Geometrie, jedoch gleichwohl ohne Hinterschnitte gebildet oder aus sogenannter spratziger Bronze durchweg irregulärer Gestalt. Auf der dem Gleitpartner zugewandten Seite des Gleitlagerverbundwerkstoffs ist eine eine Gleitfläche 8 bildende bleifreie Gleitschicht 10 vorgesehen mit einem ersten Gleitschichtmaterial 12 mit einer Matrix bildenden Kunststoffkomponente 14 für Hochleistungsanwendungen. Bei dieser Matrix bildenden Kunststoffkomponente 14 kann es sich beispielsweise um PEEK oder PAEK oder ähnliche extremst temperaturstabile Polymere handeln. Des weiteren sind in dem ersten Gleitschichtmaterial 12 Schmierstoffe wie z. B. Zinksulfid und/oder Bariumsulfat und eine härtende Komponente, wie z. B. Titandioxid und/oder Siliziumkarbid enthalten. Zusätzlich können Kohlenstofffasern und beispielsweise auch Graphit enthalten sein.

Erfindungsgemäß füllt das erste Gleitschichtmaterial 10 aber die Poren der porösen Trägerschicht 6 nicht oder nur teilweise aus. Das Porenvolumen ist nämlich durch ein zweites Gleitschichtmaterial 16 mit einer anderen Kunststoffkomponente 18, beispielsweise PPS oder PFA ausgefüllt. Die zweite Gleitschicht 16 ist dabei weniger tribologisch aktiv; sie dient vielmehr der Verankerung der Gleitschicht 10 bzw. des ersten Gleitschichtmaterials 12 an die Trägerschicht 6.

Das zweite Gleitschichtmaterial 16 kann ebenfalls Füllstoffe enthalten, dies ist jedoch nicht zwingend erforderlich. Vorzugsweise enthält das zweite Gleitschichtmaterial 16 Füllstoffe, die zur Wärmeableitung an das Metall der porösen Trägerschicht 6 dienen, wie z. B. Zinksulfid und/oder Bariumsulfat oder allgemein metallische Füllstoffe. Auch Kohlenstofffasern und Grafit sind geeignet.

## Patentansprüche

1. Gleitlagerverbundwerkstoff (2)mit einer metallischen Stützschicht (4), mit einer darauf aufgebrachten porösen Trägerschicht (6) und mit einer eine Gleitfläche (8) für einen Gleitpartner bildenden bleifreien Gleitschicht (10) mit einem ersten Gleitschichtmaterial (12) auf Kunststoffbasis, wobei das erste Gleitschichtmaterial (12) eine matrixbildende Kunststoffkomponente (14) und ferner einen Schmierstoff und eine härtende Komponente umfasst, **dadurch gekennzeichnet, dass** in die Poren der Trägerschicht (6) ein zweites Gleitschichtmaterial (16) mit einer anderen Kunststoffkomponente (18) als Haftvermittler für das die Gleitschicht (10) bildende erste Gleitschichtmaterial (12) eingebracht ist.

2. Gleitlagerverbundwerkstoff nach Anspruch 1, **dadurch gekennzeichnet, dass** das erste Gleitschichtmaterial (12) PEEK oder PAEK als matrixbildende Kunststoffkomponente umfasst oder hieraus besteht.

3. Gleitlagerverbundwerkstoff nach Anspruch 1 oder 2, **dadurch gekennzeichnet, dass** das zweite Gleitschichtmaterial (16) PPS oder PFA als Kunststoffkomponente (18) umfasst oder hieraus besteht.

4. Gleitlagerverbundwerkstoff nach Anspruch 1, 2 oder 3, **dadurch gekennzeichnet, dass** der Schmierstoff Zinksulfid und/oder Bariumsulfat umfasst.

5. Gleitlagerverbundwerkstoff nach einem oder mehreren der vorstehenden Ansprüche, **dadurch gekennzeichnet, dass** die härtende Komponente Titandioxid und/oder Siliziumcarbid umfasst.

6. Gleitlagerverbundwerkstoff nach einem oder mehreren der vorstehenden Ansprüche, **dadurch gekennzeichnet, dass** das erste Gleitschichtmaterial (12) zusätzlich Kohlenstofffasern umfasst.

7. Gleitlagerverbundwerkstoff nach Anspruch 6, **dadurch gekennzeichnet, dass** die Kohlenstofffasern eine Länge von 50 - 250 µm, insbesondere 60 - 150 µm aufweisen.

8. Gleitlagerverbundwerkstoff nach Anspruch 6 oder 7, **dadurch gekennzeichnet, dass** die Kohlenstofffasern eine Dicke von 8 - 15 µm aufweisen.

9. Gleitlagerverbundwerkstoff nach einem oder mehreren der vorstehenden Ansprüche, **dadurch gekennzeichnet, dass** der Schmierstoff und die härtende Komponente in Form feiner Teilchen mit einem D50-Wert der Teilchengröße von höchstens 500 nm, insbesondere von höchstens 400 nm, und weiter insbesondere von 100 - 350 nm vorliegt.

10. Gleitlagerverbundwerkstoff nach einem der vorstehenden Ansprüche, **dadurch gekennzeichnet, dass** der gewichtsprozentuale Anteil des Zinksulfids bezogen auf die Masse des Gleitschichtmaterials 5 - 15 Gew.-% beträgt.

11. Gleitlagerverbundwerkstoff nach einem der vorstehenden Ansprüche, **dadurch gekennzeichnet, dass** der gewichtsprozentuale Anteil der härtenden Komponente bezogen auf die Masse des Gleitschichtmaterials 5 - 15 Gew.-% beträgt.

12. Gleitlagerverbundwerkstoff nach einem der vorstehenden Ansprüche, **dadurch gekennzeichnet, dass** der gewichtsprozentuale Anteil der Kohlenstofffasern bezogen auf die Masse des Gleitschichtmaterials 5 - 25 Gew.-%, insbesondere 5 - 15 Gew.-% beträgt.

13. Gleitlagerverbundwerkstoff nach einem der vorstehenden Ansprüche, **dadurch gekennzeichnet, dass** das erste oder zweite Gleitschichtmaterial (12, 16) Zusätze von Graphitpartikeln in einem gewichtsprozentualen Anteil bezogen auf die Masse des Gleitschichtmaterials von 5 - 15 Gew.-% aufweist.

14. Verfahren zum Herstellen eines Gleitlagerverbundwerkstoffs nach einem der vorstehenden Ansprüche, die folgenden Verfahrensschritte umfassend:
- Bilden eines Verbunds aus Stützschicht (4) und poröser Trägerschicht (6) in Form eines insbesondere endlosen Bandmaterials,
- Zuführen des Bandmaterials und Einbringen des zweiten Gleitschichtmaterials (16) in die poröse Trägerschicht (6) bis die Poren teilweise oder wenigstens nahezu mit dem zweiten Gleitschichtmaterial (16) ausgefüllt sind,
- Aufbringen des ersten Gleitschichtmaterials (12) auf die Oberseite der wenigstens nahezu befüllten Trägerschicht (6) und Bilden eines Verbunds.

15. Verfahren nach Anspruch 14, weiter **gekennzeichnet durch** - Bilden eines bandförmigen Gleitschichtmaterials aus dem zuvor gemischten und erschmolzenen ersten Gleitschichtmaterial (12) **durch** Extrudieren der Schmelze,
- Zuführen des bandförmigen Gleitschichtmaterials (12) auf die Oberseite der wenigstens nahezu befüllten Trägerschicht (6) und Bilden eines Verbunds **durch** Zusammenfügen unter Druck und bei Temperaturen von 300 bis 500 C°.
